# EUROPEAN PATENT APPLICATION

(11) **EP 4 286 054 A1**
(43) Date of publication of application: **06.12.2023**
(21) Application number: 22176481.4
(22) Date of filing: 31.05.2022
(51) Int. Cl.: B01L 9/06

(54) **SAMPLE CONTAINER HOLDING AND/OR TRANSPORTING DEVICE**

(71) Applicant: Roche Diagnostics GmbH, 68305 Mannheim (DE); F. Hoffmann-La Roche AG, 4070 Basel (CH)
(72) Inventor: BAEURER, Michael, 75015 Bretten (DE); PRISTAT-GUPTA, André, 69214 Eppelheim (DE)
(74) Representative: Patentanwälte Ruff, Wilhelm, Beier, Dauster & Partner mbB

(57) **Abstract**

The invention relates to a sample container holding and/or transporting device (1) having an aperture (10) with a longitudinal axis (A), which aperture (10) is configured for receiving a sample container, wherein a biasing structure (2) is provided in the aperture (10), which comprises a plurality of elastically deflectable nubs (20, 25, 26), wherein the nubs (20, 25, 26) are distributed spatially discrete along the longitudinal axis (A) of the aperture (10). The invention further relates to a use of a structure having nubs as a biasing structure in a sample container holding and/or transporting device, and to a laboratory automation system comprising a sample container holding and/or transporting device.

## Description

### TECHNICAL FIELD AND PRIOR ART

The invention relates to a sample container holding and/or transporting device, in particular for use in or with a laboratory automation system. The invention further relates to a use of a structure having nubs as a biasing structure in a sample container holding and/or transporting device, and to a laboratory automation system comprising a sample container holding and/or transporting device.

A laboratory automation system comprises a number of pre-analytical, analytical and/or post-analytical stations, in which samples, for example blood, saliva, swab and other specimens taken from the human body and/or cultures, are processed. It is generally known to provide various containers, such as test tubes or vials, containing the samples. The test tubes are also referred to as sample tubes. In the context of the application, containers such as test tubes or vials for containing a sample are referred to as sample containers.

The sample container holding and/or transporting device is for example a tray, for storing and/or distributing a number of sample containers in a laboratory automation system, a rack, or a holder for holding sample containers while processing a sample in a laboratory automation system, and/or a rack or a holder for holding sample containers while collecting and/or manually preparing a sample for subsequent analysis.

Generally, different kinds of sample containers are handled in laboratory automation systems, in particular test tubes and/or vials of different diameters. It is therefore known to provide an aperture of the sample container holding and/or transporting device with a biasing structure, in particular springs, which biasing structure interacts with the sample container for centering the sample container in the aperture and/or for forcing the sample container against an inelastic counterpart inside the aperture. Sample container holding and/or transporting devices are for example shown DE 44 09 772 A1, EP 0 940 183 A2, and/or US 4,124,122.

### SUMMARY OF THE INVENTION

It is the object of the invention to provide a sample container holding and/or transporting device with an aperture, in which sample containers of different diameter can be held in a reliable and secure manner.

This object is solved by a sample container holding and/or transporting device with the features of claim 1, the use of a biasing structure with the features of claim 8, and a laboratory automation system with the features of claim 15. Preferred embodiments are defined in the dependent claims.

According to a first aspect, a sample container holding and/or transporting device having an aperture with a longitudinal axis, which aperture is configured for receiving a sample container, is provided, wherein a biasing structure is provided in the aperture, wherein the biasing structure comprises a plurality of elastically deflectable nubs, wherein the nubs are distributed spatially discrete along the longitudinal axis of the aperture.

According to a second aspect, a use of a structure having a plurality of elastically deflectable nubs, as a biasing structure in a sample container holding and/or transporting device having an aperture with a longitudinal axis is provided, wherein the structure is configured to be arranged in the aperture so that the nubs are distributed spatially discrete along the longitudinal axis of the aperture.

According to a third aspect, a laboratory automation system comprising a sample container holding and/or transporting device having an aperture with a longitudinal axis, which aperture is configured for receiving a sample container, is provided, wherein a biasing structure is provided in the aperture, wherein the biasing structure comprises a plurality of elastically deflectable nubs, wherein the nubs are distributed spatially discrete along the longitudinal axis of the aperture.

Throughout this specification and the following claims, the indefinite article "a" or "an" means "one or more". In particular, in embodiments the sample container holding and/or transporting device has several apertures. The apertures in embodiments are arranged in one single row or in a matrix with several rows.

Upon an insertion of a sample container into the aperture equipped with a biasing structure having a plurality of nubs, the nubs are deflected allowing to securely hold sample containers of different diameters inside the aperture. A biasing force applied by the biasing structure can be adjusted to a particular application of the sample container holding and/or transporting device inter alia by selecting a number of nubs, a density in the arrangement of the nubs, a size, in particular a length and/or a diameter of the nubs, and/or a material of the nubs.

In an embodiment, the nubs are made of a natural material having a Young's modulus allowing an elastic deflection for applying a biasing force. In another embodiment, thin metal nubs are provided having a spring constant allowing an elastic deflection for applying a biasing force. In other embodiments, the nubs are made of a synthetic material. In an embodiment, the nubs are made of silicone. Silicone has the advantage that it can withstand high temperatures for sterilization, that it is highly durable, and that it retains its shape and flexibility in extreme conditions. However, the invention is not limited to the use of nubs made of silicone. For example, in other embodiments, the nubs are made of polymer materials such as but not limited to polyethylene materials.

In embodiments of the sample container holding and/or transporting device, the aperture has a straight cylindrical shape with a circular or polygonal, in particular triangular or rectangular, cross-section.

The biasing structure is provided in the aperture. This means, that the biasing structure at least partly protrudes into a space limited by a boundary wall of the aperture, wherein for example in case the aperture is surrounded by a boundary wall having openings, the biasing structure in part may also be arranged outside the aperture.

An arrangement and/or distribution of the nubs can be chosen by the person skilled in the art for a particular application and/or a shape of the aperture, in particular in consideration of the following advantageous embodiments.

In an embodiment, all nubs are arranged so that in an unloaded state each nub extends in a plane perpendicular to the longitudinal axis of the aperture. In one embodiment the planes, in which the nubs are arranged, are equally spaced along the longitudinal axis of the aperture. In other embodiments, the planes are unevenly spaced.

In an embodiment, all nubs are arranged in single row extending in parallel to the longitudinal axis of the aperture. In this embodiment, the nubs force or bias a sample container held in the aperture in one direction. In an embodiment, the aperture apart from the nubs has a smooth surface against which the sample container is forced. In other embodiments, one or several inelastic counterparts are arranged inside the aperture, wherein the nubs force the sample container against the counterpart(s).

In an alternative embodiment, the nubs are arranged in two or more rows. The two or more rows in one embodiment have the same length. In an embodiment, the nubs of two adjacent rows are arranged in a common plane perpendicular to the longitudinal axis of the aperture. In other embodiments, the nubs are arranged in a staggered pattern, wherein nubs of adjacent rows are arranged in different planes. In an embodiment, the rows are evenly distributed along a circumference of the aperture, so that the sample container held inside the aperture is centred coaxially to a centre axis of the aperture. In other embodiments, the nubs are unevenly distributed, wherein the sample container held inside the aperture is forced in a biasing direction.

In an embodiment, a distance between nubs of the one row or nubs of each row increases or decrease along the longitudinal axis to have different biasing forces applied at different heights of the sample container. In other embodiments, the nubs of the one row or the nubs of each row are evenly distributed along the longitudinal axis of the aperture.

In alternative or in addition, in an embodiment, at least two nubs arranged in different planes perpendicular to the longitudinal axis differ in length.

In one embodiment, several nubs that differ in length are alternately arranged along the longitudinal axis and/or along the circumference of the aperture. In this case, depending on its diameter, a sample container held inside the aperture interacts with all or only some of the nubs, so that different forces are applied to sample containers, which forces depend on the diameter of the sample container.

In another embodiment, a length of the nubs of the one row or of the nubs of each row decreases with an insertion depth. Hence, a degressive biasing forces is applied to the sample container inserted in the aperture.

### BRIEF DESCRIPTION OF THE DRAWINGS

In the following, embodiments of the invention will be described in detail with reference to the drawings. Throughout the drawings, the same elements will be denoted by the same reference numerals.
- Fig. 1: shows in a simplified sectional side view a part of sample container holding and/or transporting device having an aperture and with a biasing structure comprising a plurality of elastically deflectable nubs according to a first embodiment.
- Fig. 2: shows in top view the aperture and with the biasing structure of Fig. 1.
- Fig. 3: shows in a simplified sectional side view a part of sample container holding and/or transporting device having an aperture and with a biasing structure comprising a plurality of elastically deflectable nubs according to a second embodiment.
- Fig. 4: shows in a simplified sectional side view a part of sample container holding and/or transporting device having an aperture and with a biasing structure comprising a plurality of elastically deflectable nubs according to a third embodiment.
- Fig. 5: shows in a top view an aperture with a biasing structure according to a fourth embodiment.

### DETAILED DESCRIPTION OF EMBODIMENTS OF THE INVENTION

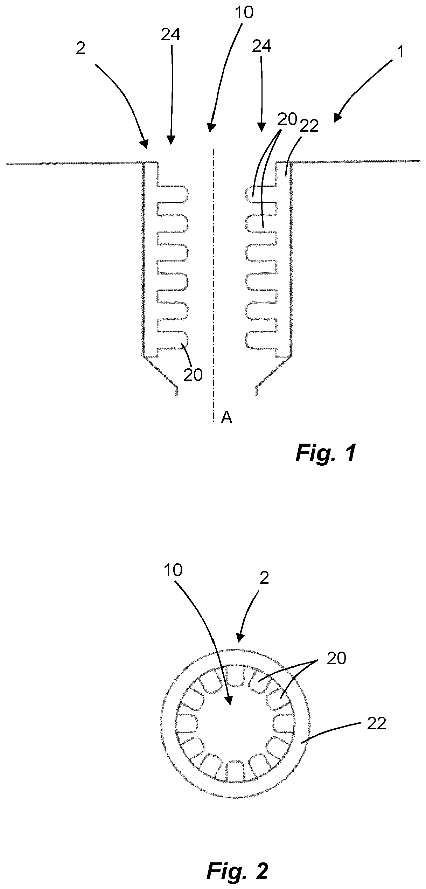

Fig. 1 and 2 show in a simplified sectional side view and a top view a part of sample container holding and/or transporting device 1 having an aperture 10 with a biasing structure 2 comprising a plurality of elastically deflectable nubs 20 according to a first embodiment.

The aperture 10 extends along a longitudinal axis A and is configured to receive sample containers (not shown) such as test tubes or vials. In the embodiment shown, the aperture 10 has a cylindrical upper part with a circular cross-section, wherein the biasing structure 2 is arranged in the upper part of the aperture 10.

In the embodiment shown, the biasing structure 2 comprises a cylindrical basic body 22, wherein the nubs 20 protrude from the basic body 22 so that in an unloaded state as shown in Figs. 1 and 2 each nub 20 extends in a plane perpendicular to the longitudinal axis.

The biasing structure 2 for example can be obtained from a flat, elastically deformable piece having a flat basic body 22 from which the nubs 20 protrude in a direction perpendicular to the flat basic body 22. This elastically deformable piece is deformed for fitting into the aperture 10.

In the embodiment shown in Figs. 1 and 2 the nubs 20 are arranged in several, for example twelve rows 24, wherein only two rows 24 are visible in Fig. 1. Each row 24 extends in parallel to the longitudinal axis A of the aperture 10 and in the embodiment shown comprises several, for example six nubs 20. As shown in Fig. 1, in the embodiment shown, the rows 24 are evenly distributed along a circumference of the aperture 10, the nubs 20 of each row 24 are evenly distributed along the longitudinal axis A of the aperture 10, and all nubs 20 have the same size, i.e., the same diameter and length, and the same form. Hence, a sample container (not shown) inserted in the aperture10 will be held to be at least essentially aligned with the longitudinal axis A by means of the biasing force applied by the nubs 20. It will be understood that the size, form, and number of nubs 20 is only by way of example and variations are possible, wherein a size, form, and number of nubs 20 as well as a material of the nubs 20 can be suitable chosen by the person skilled in the art for a particular application.

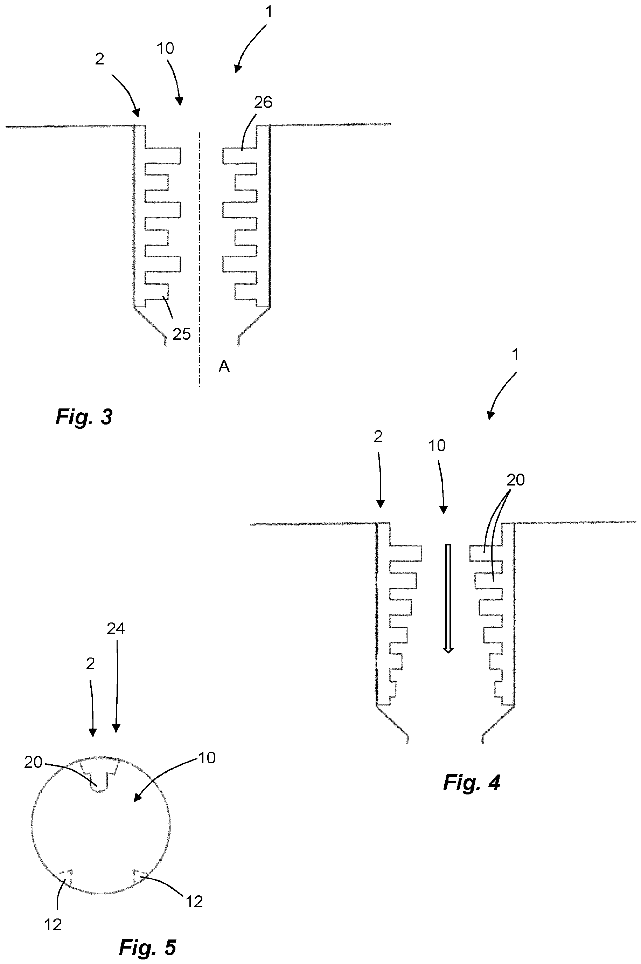

Figs. 3, 4, and 5 show examples of alternative embodiments of biasing structures 2 having nubs 20 for use in a sample container holding and/or transporting device 1.

Fig. 3 shows in a simplified sectional side view a part of sample container holding and/or transporting device 1 having an aperture 10 in which a biasing structure 2 comprising a plurality of elastically deflectable nubs 25, 26, wherein nubs 25, 26 arranged in different planes perpendicular to the longitudinal axis A differ in length. More particular, in the embodiment shown in Fig. 3, first nubs 25 of a first length and second nubs 26 of a second length, which is longer than the first length are provided, wherein the nubs 25, 26 are alternately arranged in six planes perpendicular to the longitudinal axis A. The expression "first" and "second" are only used to distinguish between two nubs 25, 26 and not to indicate any relevance or order. In particular, in the embodiment shown, at the lowest plane first nubs 25 are arranged, whereas in other embodiments, second nubs 26 are arranged at the lowest plane. Due to the nubs 25, 26 that differ in length, different biasing forces can be applied to sample containers that differ in size.

Fig. 4 shows in a simplified sectional side view a part of sample container holding and/or transporting device 1 having an aperture 10 in which a biasing structure 2 comprising a plurality of elastically deflectable nubs 20, wherein nubs 20 arranged in different planes perpendicular to the longitudinal axis A differ in length. More particular, in the embodiment shown in Fig. 4, a length of the nubs 20 decreases with an insertion depth in the direction of an arrow shown in Fig. 4. Hence, by means of the nubs 20 decreasing in length, a degressive biasing forces is applied to a sample container inserted in the aperture 10.

Fig. 5 shows in a top view an aperture 10 with a biasing structure 2 having only one row 24 of nubs 20. By means of the nubs 20, a sample container 20 is forced against an inner wall of the aperture and/or against non-deflectable counterparts 12 (shown in broken lines in Fig. 5).

It will be understood that the invention is not limited to the examples shown above and various variations are possible in particular by combining features of one embodiment with features of another embodiment.

## Claims

1. Sample container holding and/or transporting device (1) having an aperture (10) with a longitudinal axis (A), which aperture (10) is configured for receiving a sample container, wherein a biasing structure (2) is provided in the aperture (10), **characterized in that** the biasing structure (2) comprises a plurality of elastically deflectable nubs (20, 25, 26), wherein the nubs (20, 25, 26) are distributed spatially discrete along the longitudinal axis (A) of the aperture (10).

2. Sample container holding and/or transporting device according to claim 1, **characterized in that** in an unloaded state each nub (20, 25, 26) extends in a plane perpendicular to the longitudinal axis (A) of the aperture (10).

3. Sample container holding and/or transporting device according to claim 1 or 2, **characterized in that** the nubs (20, 25, 26) are arranged in one row (24) or in two or more rows (24) extending in parallel to the longitudinal axis (A) of the aperture (10), wherein in particular in case of two or more rows (24), the rows (24) are evenly distributed along a circumference of the aperture.

4. Sample container holding and/or transporting device according to claim 2 or 3, **characterized in that** the nubs (20, 25, 26) of the one row (24) or the nubs (20) of each row (24) are evenly distributed along the longitudinal axis (A) of the aperture.

5. Sample container holding and/or transporting device according to any one of claims 1 to 4, **characterized in that** at least two nubs (20, 25, 26) arranged in different planes perpendicular to the longitudinal axis (A) of the aperture (10) differ in length.

6. Sample container holding and/or transporting device according to claim 5, **characterized in that** several nubs (25, 26) that differ in length are alternately arranged along the longitudinal axis (A) and/or along the circumference of the aperture (A).

7. Sample container holding and/or transporting device according to claim 5, **characterized in that** a length of the nubs (20) decreases with an insertion depth.

8. Use of a structure having a plurality of elastically deflectable nubs (20, 25, 26) as a biasing structure (2) in a sample container holding and/or transporting device (1) having an aperture (10) with a longitudinal axis (A), wherein the structure is configured to be arranged in the aperture (10) so that the nubs (20, 25, 26) are distributed spatially discrete along the longitudinal axis (A) of the aperture (10).

9. The use of a structure according to claim 8, **characterized in that** the nubs (20, 25, 26) are arranged so that in an unloaded state each nub extends in a plane perpendicular to the longitudinal axis (A).

10. The use of a structure according to claim 8 or 9, **characterized in that** the nubs (20, 25, 26) are arranged in one row (24) or two or more rows (24) extending in parallel to the longitudinal axis (A) of the aperture (10), wherein in particular in case the nubs (20, 25, 26) are arranged in two or more rows(24), the rows (24) are evenly distributed along a circumference of the aperture.

11. The use of a structure according to claim 8 or 9, **characterized in that** the nubs (20, 25, 26) of the row (24) or of each row (24) are evenly distributed along the longitudinal axis of the aperture.

12. The use of a structure according to any one of claims 8 to 11, **characterized in that** at least two nubs (20, 25, 26) arranged in different planes perpendicular to the longitudinal axis (A) differ in length.

13. The use of a structure according to claim 12, **characterized in that** nubs (25, 26) that differ in length are alternately arranged along the longitudinal axis (A) and/or along the circumference of the aperture.

14. The use of a structure according to claim 12, **characterized in that** a length of the nubs (20) decreases with an insertion depth of the aperture.

15. Laboratory automation system comprising a sample container holding and/or transporting device (1) according to any one of claims 1 to 7.
